# EUROPÄISCHE PATENTSCHRIFT

(11) **EP 1 668 974 B1**
(45) Veröffentlichungstag und Bekanntmachung des Hinweises auf die Patenterteilung: **09.04.2008**
(21) Anmeldenummer: 05026183.3
(22) Anmeldetag: 01.12.2005
(51) Int. Cl.: A01D 34/86, A01B 39/16

(54) **Mulchgerät**
Mulching device
Outil de paillage

(30) Priorität: 07.12.2004 IT BZ20040056
(43) Veröffentlichungstag der Anmeldung: 14.06.2006
(73) Patentinhaber: Weithaler N.&G. OHG, 39020 Parcines BZ (IT)
(72) Erfinder: Weithaler, Norbert, 39020 Parcines (BZ) (IT); Weithaler, Gerald, 39020 Parcines (BZ) (IT)
(74) Vertreter: Oberosler, Ludwig

(56) Entgegenhaltungen:
- EP-A- 0 141 974
- DE-U1- 20 309 299
- US-A- 4 104 851
- US-A- 4 518 043
- US-A- 4 573 306

## Beschreibung

Es sind Mulchgeräte bekannt welche zwei oder mehrere Mulchköpfe aufweisen von denen der, gemäß Fahrtrichtung, äußerste Mulchkopf beweglich ist und gegebenenfalls von einem Sensor gesteuert wird um das Gras, auch zwischen den in Reihen angeordneten Baumstämmen, bzw. zwischen den Baumstämmen und den vertikalen Pfählen der Stützstruktur oder den vertikalen Rohren der Beregnungsanlage, zu mulchen.

Die Praxis hat gezeigt, dass die beweglichen Mulchköpfe welche dazu bestimmt sind das Gras zwischen den Baumstämmen, bzw. zwischen diesen und einem vertikalen Pfahl oder Rohr, zu mulchen, wegen der Fahrgeschwindigkeit des Mulchgerätes, wegen der Ausmaße des seitlich beweglichen Mulchkopfes, wegen der beachtlichen Veränderbarkeit des Abstandes zwischen dem Mulchgerät und den Baumstämmen während der Vorwärtsfahrt und wegen des öfters engen Abstandes zwischen den Baumstämmen, bzw. zwischen diesen und den Stützpfählen und/oder den vertikalen Beregnungsrohren, diese nicht über eine ausreichende Breite in die Zwischenräume eindringen und/oder nicht erforderlich schnell und sofort hinter dem soeben überwundenen Hindernis (Baumstamm, Pfahl, Beregnungsrohr) eindringen. Das ungenügende Ausschwenken des beweglichen Mulchkopfes erfolgt öfters weil die Bedienungsperson das Mulchgerät so steuert, dass dieses nicht genügend nahe an den Baumstämmen vorbeifährt, so dass das Ausfahren des beweglichen Mulchkopfes nicht ausreicht um eine genügende Breite des Bereiches zwischen den Baumstämmen niederzumulchen. Die zu träge Bewegung des Mulchkopfes welche bewirkt, dass ungemulchte Bereiche in der nächsten Umgebung der Baumstämme übrig bleiben, wird durch die Massenträgheit des Mulchkopfes samt dem Schwenkarm welcher diesen trägt, bewirkt; bei einer gewissen Fahrtgeschwindigkeit des Mulchgerätes, schafft es der bewegliche Mulchkopf nicht, in den Zwischenbereich zwischen den Baumstämmen, sofort nach dem Baumstamm oder dem begegneten Hindernis, einzuschwenken um so den gesamten Bereich zwischen dem soeben überwundenen Hindernis und dem nächsten Hindernis vollständig zu mulchen. Dieser letzte Missstand wäre zwar technisch ausräumbar indem die Eindringkraft des beweglichen Mulchkopfes erhöht wird, dies bringt jedoch in der Praxis mit sich, dass die Baumstämme beschädigt werden, und dass Unregelmäßigkeiten in der Vorwärtsfahrt der Maschine auftreten weil jede Ablenkung des schwenkbaren Mulchkopfes aus dem Eindringbereich eine beachtliche Belastung verursacht welche als Schlag wahrgenommen wird.

Ein weiterer Nachteil an den bekannten Mulchgeräten liegt darin, dass diese eine relativ hohe Konstruktion aufweisen, weswegen öfters die hängenden Äste der Bäume beschädigt werde und auch die Früchte in diesem Bereich beschädigt oder abgestreift werden.

Aus der EP 0 141 974 ist ein Mulchgerät bekannt welches an einem Fahrzeug mit Zapfwelle aufgebaut ist wobei der seitlich äußerste Mulchkopf am äußersten Ende eines nach hinten verschwenkbaren Armes um, z.B. um einen Baum herummähen zu können, gelagert ist. Dabei ist der Schwenkarm welcher als Gehäuse ausgebildet sein kann an dem am Fahrzeug aufgebauten, seitlich unverstellbaren Tragrahmen angelenkt, die Mulchköpfe sind mit der Zapfwelle trieblich verbunden und der Schwenkarm wird durch eine Feder in der maximalen Ausschwenkposition gehalten. Bei Auftreffen des schwenkbaren Mulchkopfes auf einen Baumstamm wird dieser samt dem Schwenkarm nach hinten geschwenkt und die Feder wird dementsprechend geladen um den Schwenkarm, nach Passieren des Baumstammes, erneut in die maximale Ausschwenkstellung zu bringen. Derartig schwenkbare Mulchköpfe haben den Nachteil, dass diese mit ihrem Gehäuse, wenn das Fahrzeug zu dicht an den Bäumen gefahren wird, wegen der nahe am Drehpunkt des Schwenkarmes liegenden Aufprallstelle, mit einer gewissen Wucht auf die Baumstämme treffen und diese beschädigen. Nur bei einem Auftreffen am äußersten Bereich des Schwenkhebels wird eine ernsthafte Beschädigung der Bäume vermieden, wobei jedoch kaum mehr um den Stamm herum gemäht wird.
Diese Nachteile könnten durch das Anbringen eines Tasters wie er aus der US 4,518,043 bekannt ist nur zum Teil beseitigt werden. Dieser Taster bewirkt das Einholen oder Zurückschwenken des seitlich vorstehenden Mulchkopfes welcher nur einwandfrei arbeitet wenn das Fahrzeug in einem möglichst konstantem "idealem" Abstand zur Baumreihe gefahren wird ansonsten kann der Mulchkopf entweder nich um den Baumstamm herum mähen oder es besteht die Gefahr dass der Schwenkarm selbst und/oder die Trägerstruktur auf welcher dieser aufgebaut ist die Baumstämme beschädigt.

Die Erfindung stellt sich die Aufgabe ein Mulchgerät der eingangs beschriebenen Art zu schaffen welches das vollständige Mulchen im gesamten Bereich, zwischen den in Reihen angeordneten Baumstämmen und zwischen diesen und eventuellen vertikalen Pfählen oder Beregnungsrohren, auch bei höherer Fahrtgeschwindigkeit, ohne Beschädigung der hängenden Äste und/oder der entsprechenden Blüten, bzw. der Früchte, ermöglicht.

Diese Aufgabe wird erfindungsgemäß durch die Merkmale des Anspruchs 1 gelöst, so dass das Mulchgerät mit einem Taster ausgestattet wird welcher auf ein Ventil wirkt das über ein hydraulisches oder pneumatisches System das seitliche Ausfahren des gesamten, rückwärts auf eine selbstfahrende Maschine aufgebauten, Mulchgerätes steuert und zwar so, dass ein gleichmäßiges Vorwärtsfahren des Mulchgerätes gesichert ist, wobei die den Baumreihe am nächsten liegende Mulchlinie welche vom Mulchkopf mit größerem Durchmesser gezogen wird welcher vom seitlich ausfahrbaren Arm getragen wird, ungefähr 3cm bis 7cm von der Tangente zu den Baumstämmen entfernt ist welche zur Baumreihe parallel verläuft. Der schwenkbare erfindungsgemäße Mulchkopf kann reduzierte Ausmaße aufweisen weil es genügt, dass nur ein Streifen mit begrenzter Breite gemulcht wird da das Mulchgerät innerhalb enger Tolleranzen und immer in nächster Nähe der Baumreihe sich vorwärts bewegt, dies bewirkt dass der Mulchkopf selbst und auch dessen Schwenkarm, begrenztes Gewicht und somit eine reduzierte Massenträgheit aufweisen um wirkungsvoll und schnell, sofort nach Überwindung des Hindernisses (Baumstamm, Pfahl, Beregnungsrohr), ausschwenken zu können. Die reduzierten Ausmaße des ausschwenkbaren Mulchkopfes und des Schwenkarmes ermöglichen eine flache Konstruktion des gesamten Gerätes so dass eine Beschädigung der hängenden Äste der Bäume samt den daran hängenden Früchten vermieden wird. Erfindungsgemäß ist die Mindestlänge des rotierenden Messers des am Schwenkarm gelagerten Mulchkopfes und somit der Mindestdurchmesser des Wirkungsbereiches dieses Messers gleich der Hälfte des Durchmessers der größten Baumstämme zuzüglich den Abstand (von 3cm bis 7cm) zwischen der Tangente zu den Baumstämmen welche parallel zur Baumreihe verläuft und der Mulchlinie welche nahe an den Baumstämmen verläuft und vom seitlich ausfahrbaren Mulchkopf gezogen wird.

Die Erfindung wird anhand eines, in der beigefügten Zeichnung schematisch dargestellten, vorzuziehenden Ausführungsbeispieles eines erfindungsgemäßen Mulchgerätes erklärt, dabei erfüllt die Zeichnung rein erklärenden, nicht begrenzenden, Zweck.

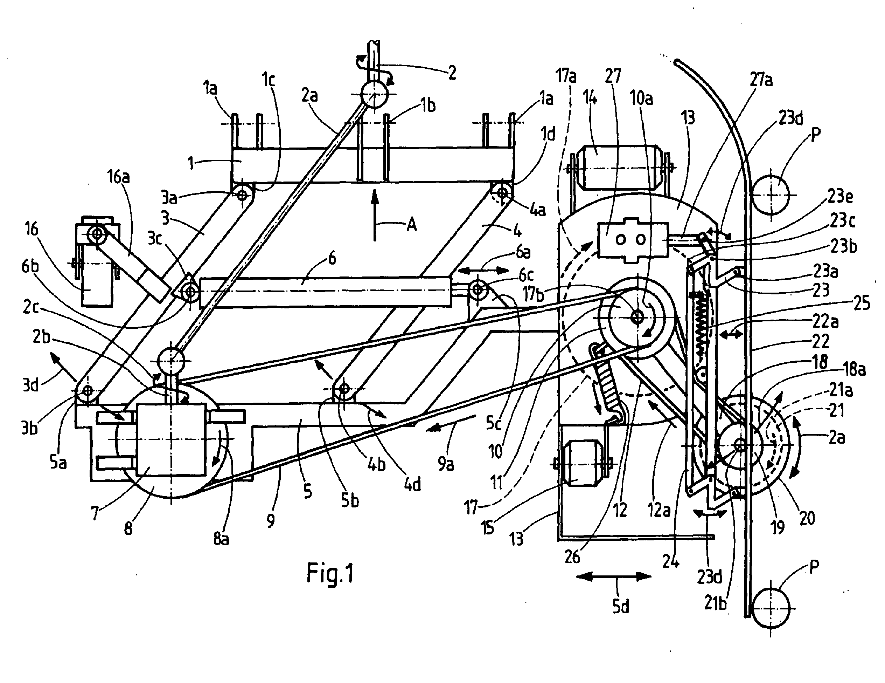

Die Fig. 1 zeigt in Draufsicht ein erfindungsgemäßes, rückwärts auf eine selbstfahrende mit Zapfwelle ausgestattete Maschine aufgebautes, Mulchgerät; das Mulchgerät ist in seitlich ausgefahrener Position gezeigt, die Tastkufe steht immer mit einem Baumstamm einer Baumreihe in Berührung, der ausschwenkbare Mulchkopf ist in einer Position im Bereich zwischen zwei Baumstämmen gezeigt.

Der Träger- und Aufbaurahmen 1 des Mulchgerätes ist an der Vorderseite mit Flanschen 1 a, 1 b für die Befestigung an den hinteren Hydraulikarmen eines mit Zapfwelle 2 ausgestatteten Traktors oder einer selbstfahrenden Maschine versehen, diese bewegt sich in Richtung A, parallel zu den Stämmen P einer Baumreihe, vorwärts. An der Rückseite weist der Rahmen 1 Lagerelemente 3a, 4a für die gelenkige Lagerung zweier horizontal schwenkbarer 3d, 4d Arme 3, 4, deren gegenüberliegendes Ende an entsprechenden Lagerelementen 5a, 5b eines horizontalen Armes 5 gelenkig gelagert 3b, 4b sind, auf, dabei bildet der Arm 5, zusammen mit dem Rahmen 1 und den Armen 3, 4, ein, in einer horizontalen Ebene bewegliches, von einem Hydraulikkolben 6 angetriebenes, Parallelogramm; wobei der Kolben einerseits im Mittelbereich des Arms 3 am Lagerelement 3c gelagert 6b ist und anderseits mittels Lagerelement 5c am horizontalen Arm welcher die Mulchköpfe trägt, gelagert 6c ist.
Der Mulchkopf welcher am seitlich vorstehenden Ende des Arms 5 gelagert ist, besteht aus einem in Richtung 17a rotierendem Messer dessen Wirkungsbereich 17 von einer oberen Abdeckung 13 geschützt wird; diese ist mit einer, gegebenenfalls verstellbaren, vorderen Stützrolle 14 und einer hinteren Stützrolle 15 versehen. Die Struktur des beweglichen Parallelogrammes 1, 3, 4, 5, 6 wird außer vom Aufbaurahmen 1 von einem, im Mittelbereich des Armes 3 gelagertem 16a, Stützrad 16 getragen; auch dieses Stützrad 16 kann vertikal verstellbar sein um den Abstand des Mulchgerätes zum Boden und somit die Höhe der Mulchebene verstellen zu können.

Die senkrechte Welle 17b des Mulchkopfes mit Wirkungsbereich 17 ist rotierend 17a am Ende des, durch Kolben 6 bewegten 5d Armes 5 gelagert, mittels Kolben 6 kann der Abstand des Wirkungsbereiches 17 des rotierenden 17a Messers zur Linie der Stämme P der Baumreihe verstellt werden.

Während an der Welle 17b, unterhalb der Abdeckung 13, das rotierende Messer montiert ist, ist oberhalb dieser der schwenkbare 18a Arm 18 für den Mulchkopf mit vertikaler Welle 21 b und Wirkungszone 21 montiert, oberhalb diesem Arm 18 sind auf der selben Welle 17b zwei Riemenscheiben 10, 11 oder eine einzige Riemenscheibe mit zwei Rillen welche eventuell unterschiedlichen Durchmesser haben, montiert. Die Lagerung der Welle 17b, das entsprechende rotierende Messer, die Lagerung für den Schwenkarm 18 und die Riemenscheiben haben erfindungsgemäß in ihrer vertikalen Erstreckung minimale Ausmaße, dies ermöglicht eine äußerst flache Bauweise des gesamten Mulchgerätes, bzw. jenes Teiles des Gerätes welcher unter den herabhängenden Ästen der Bäume durchgeführt wird ohne diese zu beschädigen.

Die Kraftübertragung von der Zapfwelle 2 des Traktors oder der selbstfahrenden Maschine erfolgt über die mit zwei Kardangelenken ausgestattete Welle 2a welche an die Antriebswelle 2b eines, zwischen den Lagerungen 5a, 5b, am Arm 5 aufgebauten Getriebes 7 angeschlossen ist. Dieses Getriebe 7 ist an der Ausgangswelle mit einer, in Richtung 8a drehenden, Riemenscheibe 8 versehen welche die Bewegung mittels Keilriemen 9 auf die Riemenscheibe 10 überträgt welche, zusammen mit der Riemenscheibe 11, auf der Welle 17b des, am seitlich ausragenden Ende des Armes 5 getragenen Mulchkopfes, gelagert ist. Von der Riemenscheibe 11 hingegen wird die Drehbewegung 10a über den Keilriemen 12 auf die Riemenscheibe 19 übertragen welche an der Welle 21 b des ausschwenkbaren 18a Mulchkopfes befestigt ist. Nachdem der Durchmesser des rotierenden Messers an der Welle 21 b dieses Mulchkopfes kleiner als der Durchmesser des rotierenden Messers an der Welle 17b des anderen Mulchkopfes ist, wird der Riementrieb 12 genutzt um die Drehzahl der Welle 21 b bezüglich der Drehzahl der Welle 17b zu erhöhen.
Die Erfindung schließt nicht aus, das rotierende Messer an der Welle 21 b durch eine bekannte Mulchbürste zu ersetzen.
Erfindungsgemäß ist der Mindestdurchmesser des Wirkungsbereiches 21 welcher durch die Rotation des, an der Welle 21 b, montierten Messers definiert wird, gleich der Hälfte des Durchmessers der dicksten Stämme P der Baumreihe, zuzüglich den Abstand (von ca. 3cm bis ca. 7 cm) zwischen der Tangente zu den Baumstämmen P welche parallel zur Baumreihe verläuft und der Mulchlinie welche der Baumreihe am nächsten liegt und vom ausschwenkbaren 5d Mulchkopf gezogen wird.

Nachdem der schwenkbare 18a Arm 18 und der gesamte Mulchkopf, zusammen mit der Welle 21 b, der Riemenscheibe 19 und dem gummierten freilaufenden Schutzrad 20, begrenzte Ausmaße und eine leichte Konstruktion aufweisen, wird die durch die Zugfeder 26, welche zwischen dem Arm 18 und der Abdeckung 13 wirkt, hervorgerufene Ausschwenkbewegung unter Wirkung einer verminderten Massenträgheit ausgeführt, wodurch bei einer zur Baumreihe parallelen Vorwärtsbewegung A des Gerätes, infolge einer durch einen Stamm P, durch einen Pfahl oder ein Beregnungsrohr, bewirkte Ablenkung, ein sofortiges anschließendes Eindringen des Mulchkopfes in den Bereich zwischen den Baumstämmen P erreicht wird. Auf diese Weise erfolgt das Mulchen auch in nächster Nähe der Baumstammes sei es, gemäß Fahrtrichtung A, im Bereich nach dem soeben passierten Baumstamm, als auch im Bereich vor dem nächsten vom Mulchkopf begegneten Baumstamm.

Erfindungsgemäß setzen die reduzierten Ausmaße des schwenkbaren Mulchkopfes und somit die reduzierte Massenträgheit, was die Schwenkbewegung 18a betrifft, voraus, dass der Mulchkopf mit Welle 17b zusammen mit dem Arm 5 in Richtung 5d verfahrbar ist und dass dieser gleichmäßig und mit nur begrenzten Schwankungen betreffend den Abstand zur Linie der Stämme P der Baumreihe vorwärtsbewegt wird. Erfindungsgemäß werden also, zwecks Einhaltung eines gleichmäßigen Abstandes des ausschwenkbaren Mulchkopfes zur Baumreihe, die Unregelmäßigkeiten der Vorwärtsbewegung A des selbstfahrenden Fahrzeuges an welchem das Mulchgerät aufgebaut ist über ein Regelsystem ausgeglichen welches durch eine Tasterkufe 22 gesteuert wird. Diese ist beweglich 22a an der Abdeckung des Mulchkopfes mit Welle 17b gelagert und mit einem Steuerventil 27, 27a verbunden 23e welches die Bewegung 6a des Kolbens 6 steuert der die seitliche Verschiebung 5d des Armes 5 zusammen mit dem genannten Mulchkopf bewirkt.

Die Tastkufe 22 verfügt über einen gebogenen vorderen Einlaufteil und einem anschließenden geradlinigen Teil welcher an den Stämmen P der Baumreihen anliegt, dieser geradlinige Teil kann gegebenenfalls mit einer einstellbaren, z.B. ausziehbaren, hinteren Verlängerung ausgestattet sein. Der geradlinige Teil hat eine Länge welche etwas größer ist als der maximale Abstand zwischen den Stämmen P der Baumreihen sodass die Tastkufe während der Vorwärtsbewegung A immer an mindestens einem Stamm P anliegt. Die Tastkufe 22 ist an zwei Schwenkhebeln 23 gelagert welche drehbar 23d an der Abdeckung des Mulchkofes mit Welle 17b oder am Rahmen gelagert sind. Diese Schwenkhebel 23 sind an jeweils einem Ende gelenkig 23a mit der Tastkufe 22 verbunden während die jeweils entgegengesetzten Enden gelenkig 23e über eine Stange 24 verbunden sind auf welche eine, eventuell einstellbare, Zugfeder 25 wirkt welche an der Abdeckung 13 befestigt ist und die Tastkufe 22 in Richtung Stämme P bewegt 22a. Bei maximaler Ausfahrstellung der Tastkufe 22 kommt diese, während der wesentlich parallel zu den Stämmen P einer Baumreihe verlaufenden Vorwärtsbewegung A, mit diesen in Berührung und wird in Richtung 22a zur Abdeckung 13 bewegt wodurch die Schwenkarme 23 eine Drehbewegung 23d ausführen, die Zugfeder auf Zug belastet wird und das Ventil 27 betätigt wir. Dieses bewirkt, infolge eines bestimmten Betätigungsweges, den Rückzug 6a des Kolbens im Zylinder 6 und somit den Rückzug des Armes 5 zusammen mit dem Mulchkopf und der Tastkufe 22 bis dieser eine mittlere Stellung des Gesamthubes einnimmt. Wird anschließend der Abstand zur Baumreihe vergrößert und somit die Tastkufe 22 durch die Feder 25 aus ihrer Mittelstellung bewegt, so wird wiederum das Ventil 27 betätigt und in diesem Fall das Ausfahren 5d des Armes 5 in Richtung Baumreihe bewirkt, bis die Tastkufe 22 erneut die Mittelstellung einnimmt.

Die automatisierte Regulierung der Beibehaltung eines gleichmäßigen Abstandes innerhalb eher enger Grenzwerte seitens des Mulchkopfes mit Welle 17b in Bezug auf die Baumreihe ermöglicht es, auch bei einem eher unregelmäßigem Vorwärtsfahren A der selbstfahrenden Maschine was den Abstand zur Baumreihe betrifft, das vollständige Mulchen der Bereiche zwischen den Stämmen P, bzw. zwischen denen und eventuellen Pfählen oder Beregnungsrohren, zu erreichen auch wenn diese verhältnismäßig in engem Abstand zueinander stehen, weil der schwenkbare 18a Mulchkopf sehr reduzierten Durchmesser hat und somit auch in enge Zwischenräume sofort und schnell eindringen kann.

Die Erfindung schließt natürlich nicht aus, dass am selben Arm 5 mehr als ein Mulchkopf montiert sein können, dass dieser Arm 5 gleitend, ohne bewegliches Parallelogramm, seitlich ausgefahren werden kann und dass das Gerät beidseitig seitlich ausgefahren werden kann um wahlweise bei der Durchfahrt zwischen den Baumreihen die eine oder die andere Seite zu bearbeiten.

## Patentansprüche

1. Mulchgerät welches an einem selbstfahrenden, mit Zapfwelle und ölhydraulicher oder pneumatischer Anlage versehenem, Fahrzeug aufgebaut ist, mindestens einen seitlich, quer zur parallel zu einer Baumreihe ausgeführten Vorwärtsbewegung (A), ausfahrbaren (5d) Mulchkopf und einen ausschwenkbar (18a) gelagerten Mulchkopf welcher durch Wirkung einer Feder (26) in die Zwischenbereiche zwischen den Baumstämmen (P) der Baumreihe eindringt, aufweist, wobei der hydraulische oder pneumatische Zylinder (6) welcher das seitliche Ausfahren (5d) bewirkt durch ein Ventil (27, 27a) gesteuert wird welches durch einen Taster betätigt wird, der in und der schwenkbare (18a) Arm (18) für den Mulchkopf mit Welle (21b) welche in die Zwischenbereiche zwischen den Stämmen (P) einschwenkt, konzentrisch zur Welle (17b) des am Ende des Arms (5) vorgesehenen Mulchkopfes gelagert ist,
**dadurch gekennzeichnet, dass** der Taster ein Kufentaster (22) ist und wesentlich quer zur Fahrtrichtung (A) des Mulchgerätes beweglich (22a), mittels Drehbolzen (23a), an den äußeren Enden zweier Schwenkhebel (23) gelagert ist welche ihrerseits drehbar (23b) an der Abdeckung (13) und/oder am entsprechenden Rahmen gelagert sind und an ihren inneren Enden über eine Stange (24) und Drehbolzen (23c) verbunden sind und dass diese Stange (24) und/oder einer der Schwenkhebel (23) von einer Feder (25) belastet sind welche den Kufentaster (22) in die seitliche Ausfahrstellung bewegt.

2. Mulchgerät gemäß Anspruch 1, **dadurch gekennzeichnet, dass** das Ventil (27,27a) welches den hydraulischen oder pneumatischen Kolben (6) steuert über einen der Schwenkhebel (23), über die Verbindungsstange (24), bzw. direkt oder indirekt über den Kufentaster (22), betätigt wird.

3. Mulchgerät demäß Anspruch 1, **dadurch gekennzeichnet, dass** der Kufentaster vorne aus einem gebogenen oder schrägen Einlaufteil besteht welcher sich anschließend in einem geradlinigen Teil fortsetzt welcher sich in Längsrichtung über eine Länge erstreckt welche mindestens gleich dem größten Abstand zwischen den Stämmen der Baumreihe ist.

4. Mulchgerät gemäß den Ansprüchen 1 und 3, **dadurch gekennzeichnet, dass** der geradlinige Teil des Kufentasters (22) durch einen ausziehbaren oder anbaubaren Teil verlängerbar ist.

5. Mulchgerät gemäß Anspruch 1, **dadurch gekennzeichnet, dass** die Lagerung der Welle (17b) des Mulchkopfes welcher am Ende des Armes (5) vorgesehen ist, zusammen mit den entsprechenden Riemenscheiben (10, 11) und der Lagerung des Schwenkarmes (18) für den Mulchkopf welcher in die Zwischenbereiche zwischen den Stämmen (P) eindringt, was die vertikalen Ausmaße betrifft, eine kompakte Konstruktion ergeben und dass der Schwenkarm (5) zusammen mit dem Mulchkopf mit Welle (21 b), der Riemenscheibe (19) und dem gummierten frei laufenden Schutzrad (20), eine leichte Konstruktion aufweisen um die Massenträgheit der gesamten schwenkbaren Einheit (18, 19, 20, 21 b) zu reduzieren und **dadurch** schnelle Eindringbewegungen des Mulchkopfes in die Zwischenbereiche zwischen den Stämmen (P), bzw. zwischen denen und vertikalen Pfählen oder Beregnungsrohren, unter Nutzung der einstellbaren, eher niedrigen Kraft der Feder (26), zu erreichen.

## Claims

1. Mulching device, which is mounted on a self-propelled vehicle equipped with a power take-off shaft and an oil-hydraulic or pneumatic system, exhibits at least one mulching head that is extendable (5d) laterally and transversely to the forward movement (A) executed parallel to a row of trees, and a mulching head mounted in such a way as to be capable of pivoting (18a), which is caused to penetrate by the effect of a spring (26) into the intermediate spaces between the tree trunks (P) in the row of trees, in which the hydraulic or pneumatic cylinder (6), which brings about the lateral extension (5d), is controlled by a valve (27, 27a) which is actuated by a feeler and the pivoting (18a) arm (18) for the mulching head with a shaft (21b), which pivots into the intermediate spaces between the tree trunks (P), is supported concentrically in relation to the shaft (17b) of the mulching head provided at the end of the arm (5), **characterized in that** the feeler is a skid feeler (22) and is capable of displacement (22a) essentially transversely to the direction of travel (A) of the mulching device and is supported by means of fulcrum pins (23a) on the outer ends of two pivot levers (23), which are themselves mounted in such a way as to be capable of rotating (23b) on the cover (13) and/or on the corresponding frame and are attached at their inner ends via a rod (24) and fulcrum pins (23c), and **in that** this rod (24) and/or one of the pivot levers (23) are acted upon by a spring (25), which causes the skid feeler (22) to move into its laterally extended position.

2. Mulching device according to Claim 1, **characterized in that** the valve (27, 27a), which controls the hydraulic or pneumatic piston (6), is actuated via one of the pivot levers (23), via the connecting rod (24) and directly or indirectly via the skid feeler (22).

3. Mulching device according to Claim 1, **characterized in that** the skid feeler at the front consists of a curved or inclined inlet element, which then continues in the form of a rectilinear element, which extends in the longitudinal direction for a distance which is at least equal to the greatest distance between the trunks in the row of trees.

4. Mulching device according to Claims 1 and 3, **characterized in that** the rectilinear element of the skid feeler (22) is capable of being extended by means of a retractable or mountable element.

5. Mulching device according to Claim 1, **characterized in that** the bearing for the shaft (17b) of the mulching head, which is provided at the end of the arm (5), together with the corresponding belt pulleys (10, 11) and the bearing for the pivot arm (18) for the mulching head, which penetrates into the intermediate spaces between the tree trunks (P), provide a compact configuration as far as its vertical dimensions are concerned, and **in that** the pivot arm (5) together with the mulching head with its shaft (21b), the belt pulley (19) and the rubber-tyred, freely rotating guard wheel (20), exhibit a lightweight construction in order to reduce the inertia of the entire pivoting unit (18, 19, 20, 21b) and in this way to achieve rapid penetration movements of the mulching head into the intermediate spaces between the tree trunks (P) and between them and vertical posts or irrigation pipes by utilizing the adjustable, and rather lower, force of the spring (26).

## Revendications

1. Outil de paillage, monté sur un véhicule automoteur, muni d'un arbre de prise de force et d'une installation hydraulique ou pneumatique, au moins une tête de paillage (5d) déployable latéralement, transversalement par rapport à un déplacement d'avancement (A) effectué parallèlement à une rangée d'arbres, et une tête de paillage montée de façon à pouvoir effectuer un échappement par pivotement (18a) et qui, par l'effet d'un ressort (26), pénètre dans les zones intermédiaires se trouvant entre les troncs d'arbre (P) de la rangée d'arbres, le vérin hydraulique ou pneumatique (6) qui provoque l'évitement latéral (5d) étant commandé par une soupape (27, 27a) actionnée par un palpeur, et le bras (18) susceptible de pivoter (18a) pour la tête de paillage étant monté à rotation avec l'arbre (21b) qui pénètre par pivotement dans les zones intermédiaires se trouvant entre les troncs (P), concentriquement par rapport à l'arbre (17b) de la tête de paillage prévue à l'extrémité du bras (5).
**caractérisé en ce que** le palpeur est un palpeur à patin (22) et est mobile (22a) sensiblement transversalement par rapport à la direction de roulage (A) de l'outil de paillage, est monté à rotation, au moyen de boulons de rotation (23a), sur les extrémités extérieures de deux leviers pivotants (23) qui, de leur côté, sont montés à rotation (23b) sur le couvercle (13) et/ou sur le cadre correspondant et sont reliés, à leurs extrémités intérieures, par une barre (24) et un boulon de rotation (23c), et **en ce que** cette barre (24) et/ou l'un de leviers pivotants (23) est/sont chargés par un ressort (25) déplaçant le palpeur à patin (22) dans la position d'échappement latérale.

2. Outil de paillage selon la revendication 1, **caractérisé en ce que** la soupape (27, 27a) qui commande le piston hydraulique ou pneumatique (6) est actionnée par l'intermédiaire d'un des leviers pivotants (23), par l'intermédiaire de la barre de liaison (24), ou, directement ou indirectement, par l'intermédiaire du palpeur à patin (22).

3. Outil de paillage selon la revendication 1, **caractérisé en ce que** le palpeur à patin est composé à l'avant d'une partie de pénétration, cintrée ou oblique, qui se prolonge ensuite en une partie rectiligne, qui s'étend en direction longitudinale sur une longueur qui est au moins égale à l'espacement maximal entre les troncs de la rangée d'arbres.

4. Outil de paillage selon les revendications 1 et 3, **caractérisé en ce que** la partie rectiligne du palpeur à patin (22) est susceptible d'être prolongée au moyen d'une partie pouvant être extraite ou pouvant être rapportée.

5. Outil de paillage selon la revendication 1, **caractérisé en ce que** le montage en palier de l'arbre (17b) de la tête de paillage qui est prévue à l'extrémité du bras (5), conjointement avec les poulies (10, 11) correspondantes et le montage en palier du bras pivotant (18) pour l'outil de paillage qui pénètre dans les zones intermédiaires entre les troncs (P), pour ce qui concerne les dimensions verticales, donnent une construction compacte, et **en ce que** le bras pivotant (5), conjointement avec la tête de paillage avec l'arbre (21b), la poulie (19) et la roue de protection (20) tournant librement et caoutchoutée, présentent une construction légère, pour réduire l'inertie des masses de l'ensemble de l'unité (18, 19, 20, 21b) susceptible de pivoter et, de ce fait, obtenir des déplacements de pénétration rapide de la tête de paillage dans les zones intermédiaires entre les troncs (P), ou entre eux et des poteaux verticaux ou des tubes d'arrosage, en utilisant la force réglable, assez faible, du ressort (26).
